# EUROPEAN PATENT APPLICATION

(11) **EP 1 385 282 A1**
(43) Date of publication of application: **28.01.2004**
(21) Application number: 02255096.6
(22) Date of filing: 22.07.2002
(51) Int. Cl.: H04B 10/207, H04N 7/22, G02B 6/24

(54) **Optical network using passive reflective splitting**

(71) Applicant: LUCENT TECHNOLOGIES INC., Murray Hill, New Jersey 07974-0636 (US)
(72) Inventor: Smets, Rob C., 1381 XV Weesp (NL)
(74) Representative: Sarup, David Alexander

(57) **Abstract**

The invention concerns a splitter (11), for instance as used in an optical network, that is connectable to at least one optical line terminal (3) and at least two optical network units (20). The splitter (11) is arranged to communicate with the optical network units (20) via a first communication channel (4) and the splitter (11) is arranged to communicate with the optical network units (20) via a separate second communication channel (30) for each optical network unit (20). The splitter (11) passes through all communication signals received from the optical line terminal (3) to all the optical network units (20). The splitter (11) also passes through all communication signals received from the optical network units (20) to the optical line terminal (3) and reflects those signals to all optical network units (20).

## Description

### FIELD OF THE INVENTION

The invention relates to a splitter, connectable to at least one optical line terminal and at least two optical network units, in which said splitter, when connected to said optical line terminal, is arranged to communicate with said optical line terminal via a first communication channel, and in which said splitter, when connected to said two or more optical network units, is arranged to communicate with said two or more optical network units via a separate second communication channel for each optical network unit, and in which said splitter is arranged to pass through all communication signals received from the optical line terminal to all said optical network units, and in which said splitter is arranged to pass through all communication signals received from any one of the optical network units to said optical line terminal.

In a further aspect the present invention relates to an optical distribution network, comprising at least one splitter according to the present invention, in which the splitter is connectable to an optical line terminal and a plurality of optical network units.

In a further aspect the present invention relates to a method for communication in a passive optical network, the passive optical network connecting an optical line terminal with a plurality of optical network units based on time division multiple access and comprising at least one splitter according to the present invention.

### BACKGROUND

A passive optical network allows communication between a plurality of optical network units, for instance located at residential premises or at enterprises, and optical line terminals, located at the operator's local exchange or central office.

A known optical network distribution-geometry is discussed in *"Ethernet passive optical network (EPON): Building a next Generation optical access network",* IEEE Communications Magazine V40, 2, FEB, 2002, p. 66-73, authors Kramer, G. and Pesavento, G., in which a Gb-ethernet passive optical network is discussed. The optical distribution network geometry makes use of a time division multiplexing technique to connect 64 optical network units with one optical line terminal using a 1 Gb-ethernet communication channel.

In the time division multiplexing technique collisions between signals from and/or for different optical network units are prevented, because every optical network unit is given a certain timeslot in which it may use the communication channel. So three different signals AAAA, BBBB, CCCC are transported through the communication channel as follows: AABBCCAABBCC. In order to prevent collisions all the optical network units should be synchronized in order to know when exactly it is their turn to use the communication channel. As a result of this, part of the capacity of the connection is used for the transmission of synchronization signals from the optical line terminal to the optical network units and part of the capacity is lost because blank intervals are placed in between each timeslot.

A problem associated with optical distribution networks as described above is that part of the capacity is used to transmit synchronization signals. Another problem is that such an optical distribution network geometry is not scaleable. The reason for this is that a higher line rate requires a larger optical budget and, therefore, requires a lower splitting ratio of the optical distribution network resulting in fewer optical network units being connectable to the passive optical network. In addition a higher line rate results in more expensive electro-optical components in both the optical network units and the optical line terminals.

The above mentioned disadvantage refers mainly to the (optical) power budget when increasing the number of optical network units. Part of the increased bandwidth requirement for synchronization is caused by the optical line terminal requiring more synchronization overhead in the medium access control (MAC) to accommodate an increased number of optical network units. Permits are sent downstream from optical line terminal to the optical network units to allow these to send cells without collision.

### SUMMARY OF THE INVENTION

The present invention seeks to provide an optical distribution network with scaleable network architecture and a synchronization technique that doesn't require special synchronization signals.

According to the present invention, a splitter is provided of the type defined in the preamble above, in which said splitter is arranged to pass through all communication signals received from any one of the optical network units to all optical network units. This allows to implement initialisation and synchronisation in the optical network units, which reduces the overhead otherwise required in the downstream data traffic from the optical line terminal. Consequently, the optical line terminal requires less complex circuitry, which results in cost savings.
By having the collision prevention mechanism locally implemented in the optical network units, no centralized mechanism is necessary in the optical line terminal. Also. optical network units now are aware of each others behavior; allowing also to have a more autonomous and self-supporting network: e.g. temporary bandwidth increase in one optical network unit may be provided by another optical network unit.

In a further embodiment, said splitter is arranged for reflecting all communication signals received from anyone of the optical network units to all optical network units. This may e.g. be accomplished using a highly reflective mirror, such as a gold plated polished connector or in fiber reflective fiber Bragg grating. This allows for a low cost production of the reflective splitter. An in fiber reflective fiber Bragg grating has the advantage that it can provide a wavelength dependent reflection.

In a further aspect, the present invention relates to an optical distribution network of the type defined in the preamble above, in which said optical line terminal is arranged to communicate with a network, in which said network is for instance the internet or a intranet.

In a further embodiment, said optical distribution network comprises a router, in operation the router being connected to the first communication channel or the router is connected to a plurality of splitters via associated first communication channels. This allows for an improved scaleability. The splitter disclosed here can be used to build a cost-effective optical distribution network, which is easily scaleable and allows for higher line rates.

In a still further aspect, the present invention relates to a method for communication in a passive optical network of the type defined in the preamble above comprising the steps of:
- initialising communication by one of the plurality of optical network units by sending an initialization message using a predetermined part of the bandwidth available from the optical line terminal
- monitoring the received signal for messages from other ones of the plurality of optical network units for detecting collision of data traffic; and, if collision occurs, delaying transmission of further packets by a predetermined amount of time such that no other overlap of transmissions occur.

This allows to implement the initialisation and synchronisation functions of the optical distribution network in the optical network units, thus saving the otherwise required overhead in the downstream traffic.

In an embodiment of the present method, the method comprises the further steps of:
- measuring the time between sending a message by an optical network unit and receiving that same message by that same optical network unit;
- using the measured time to determine the proper start time for transmitting in an assigned time slot.

These steps allow the optical network units to determine the optical path length between the optical network unit and the reflective splitter, and to start transmission of data synchronised in the proper timeslot.

In a further embodiment, initialization of the optical network units is done in a predetermined order. This will allow an efficient initialisation and synchronisation of all optical network units, as all optical network units are efficiently synchronised with first initialised optical network unit.

Alternatively, the optical network unit receives a control message comprising a maximum available bandwidth amount for each of the plurality of optical network units. This maximum available bandwidth amount may be equal to zero, thus creating a possibility to effectively shut down data communication from a specific optical network unit. The total communication capacity used by each said optical network unit can for instance be equal to each other.

### BRIEF DESCRIPTION OF THE DRAWINGS

The invention will be explained with reference to a number of drawings which are only intended to illustrate the present invention and not to limit its scope which is only limited by the appended claims.
Figure 1 shows a network architecture.
Figure 2 shows a preferred embodiment of a reflective splitter according to the present invention.
Figure 3 shows a possible embodiment of an optical network unit.
Figure 4 shows a possible embodiment of an optical line terminal as used in the network architecture according to figure 1.
Figure 5 shows a network architecture according to an alternative embodiment of the invention.

### DETAILED DESCRIPTION OF EXEMPLARY EMBODIMENTS

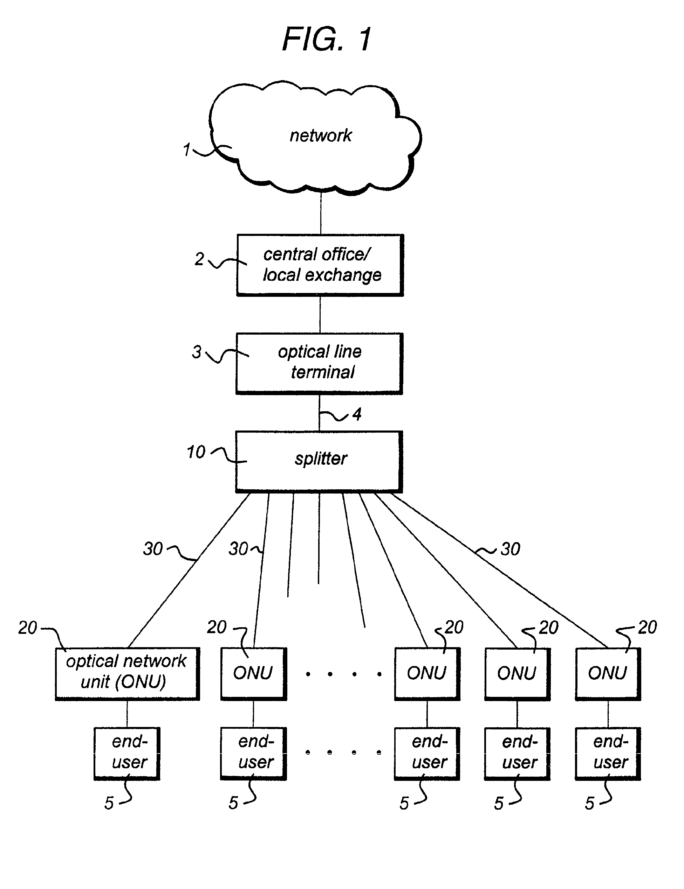

Figure 1 shows a network architecture according to the prior art comprising an optical line terminal 3, which is on one hand arranged to communicate with a central office or a local exchange 2. On the other hand, the optical line terminal 3 is arranged to communicate with a plurality of optical network units 20 via a first communication channel 4, for instance an optical fibre, a splitter 10, connected to the first communication medium 4 and a plurality of second communication channels 30.

Communication from the optical line terminal 3 to the optical network units 20 is called downstream traffic; communication from the optical network units 20 to the optical line terminal 3 is called upstream traffic.

The central office or local exchange 2 is arranged to communicate with a network 1, which for instance can be the internet or an intranet.

Although all connections in figure 1 are shown as physical connections, one or more of these connections can be made wireless. They are only intended to show that "connected" units are arranged to communicate with one another.

Each optical network unit 20 is arranged to communicate with end-user equipment 5. However, this end-user equipment 5 can also be a group of end-users, a network, an optical network or the like.

The part of the network shown in figure 1 is called an optical distribution network. Such an optical distribution network enables the optical network units 20 to communicate with other optical network units at remote locations (not shown) via a network 1. Such a network 1 can be a Local Area Network (LAN) or a Wide Area Network (WAN) as for instance an intranet or the internet.

The first communication channel 4 between the splitter 10 and the optical line terminal 3 is shared by all the optical network units 20, as figure 1 clearly shows. Line sharing introduces the possibility that signals from and/or for different optical network units 20 collide, when the same communication channel is used by more than one optical network unit 20 at the same time. The term communication channel is used here to denote a connection that can only be used for one transmission at the same time. This can for instance be a fibre or a copper wire, but can also be a carrier frequency used to transport a signal over a communication medium, such as an optical fibre, or a wireless communication medium. Different techniques can be used to prevent collisions.
The splitter 10 commonly used is an N x 1 splitter, which evenly distributes the optical power of the single port connected to the optical line terminal 3 over N ports connected to the optical network units 20.

According to the present invention, a reflective splitter 11 is provided that can be implemented in the network architecture shown in figure 1 instead of the known splitter 10. In the preferred embodiment described below, only a limited number of optical network units can be connected to the reflective splitter 11, in this case eight optical network units are connected to the reflective splitter 11.

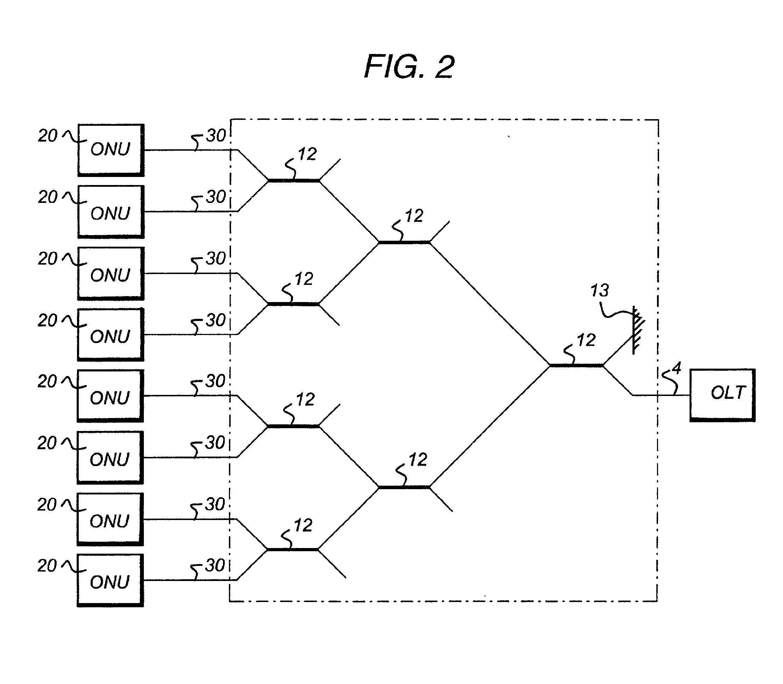

Figure 2 shows a preferred embodiment of a reflective splitter 11 according to the present invention, where the reflective splitter 11 is arranged to communicate with the optical line terminal 3 via a first communication channel 4. Furthermore, the reflective splitter 11 is arranged to communicate with the eight optical network units 20 via eight second communication channels 30.

Each optical network unit 20 has its own second communication channel 30 to the reflective splitter 11, but inside the reflective splitter 11 all of the incoming channels 30 are coupled in pairs using 2x2 couplers 12, known as such to persons skilled in the art. Thus, a first communication channel 30 and a second communication channel 30 are coupled, a third and a fourth are coupled etc. This results in four lines, but the coupling in pairs can be repeated with those four lines until only one first communication channel 4 remains. The last 2x2 coupler 12, closest to communication channel 4, has a highly reflective mirror 13 connected to the otherwise not used exit port of the 2x2 coupler 12. This mirror 13 can for instance be a gold plated polished connector, but can also be any other suitable reflector known to a person skilled in the art, such as in fiber reflective fiber Bragg grating . This way an 8x1 reflective splitter 11 is formed, but also other possible reflective splitters 11 can be formed, for instance a 4x1 or a 16x1 reflective splitter 11. An in fiber reflective fiber Bragg grating has the advantage that it can provide a wavelength dependent reflection.

The reflective splitter 11 passes through signals from the optical line terminal 3 to the optical network units 20. Thus, every optical network unit 20 receives all the downstream traffic, but is arranged to only send through the traffic intended for the end-user 5 connected with that specific optical network unit 20.

The optical power received by the reflective splitter 11 at the port connected to the optical line terminal 3 is evenly distributed by the reflective splitter 11 over the eight ports connected to the optical network units 20.

The reflective splitter 11 passes through all the signals received from each optical network unit 20 to the optical line terminal 3, but this upstream traffic is also reflected by the mirror 13 and is thus reflected to all of the optical network units 20.

In the reflective splitter 11 of this embodiment, using a number of cascaded 2x2 couplers 12. the optical power input by each optical network unit 20 is also attenuated by a factor of eight once it reaches the port of the reflective splitter 11 connected to the optical line terminal 3, or reaches the mirror 13.

The power budget should be looked at carefully because the upstream traffic that is reflected by the mirror 13 passes the reflective splitter 11 twice, in upstream direction as well as in downstream direction. Hence, only 1/64th of the optical power input by an optical network unit 20 is received back by that specific optical network unit 20. This puts an upper limit to both the line rate and the maximum number of optical network units 20 connectable to the reflective splitter 11.

All the optical network units 20 receive all the upstream traffic as well as all the downstream traffic. This enables the optical network units 20 to monitor the timeslots used by the other optical network units 20 and use that information to decide when to start their communication, in order to avoid collisions. Therefore the optical network units 20 are ordered in a hierarchical relationship to each other, in which each optical network unit 20 may have it's own unique priority level.

After start up of the passive optical network, all optical network units 20 are silent and monitor the downstream traffic, including the reflected upstream traffic. The optical network unit 20 that is highest in the hierarchy starts sending packets upstream. If for instance eight optical network units 20 are connected to the reflective splitter 11 and a 100Mb/s-communication channel is used, the first optical network unit 20 claims no more than 12,5Mb/s. which is 1/8 of the total available capacity.

Subsequently the second optical network unit 20 can start sending packets, knowing that the first optical network unit 20 is already sending packets. Collisions with the traffic from the first optical network unit 20 can be prevented, because the second optical network unit 20 monitors both the downstream and the reflected upstream traffic from the first optical network unit 20. When collisions occur, the second optical network unit 20 will delay its data stream, until no collisions occur anymore. This monitoring allows the second optical network unit 20 to communicate without collisions.
Now the other optical network units 20 can start participating one by one in order of their mutual hierarchy. This method enables a collision-free data-exchange between the optical network units 20 and the optical line terminal 3, without using special synchronization signals.

By timing the period between sending and receiving an initialisation message, the optical network unit 20 can calculate the optical path length between optical network unit 20 and reflective splitter 11. From this, it is possible to calculate the proper start time for a message from the optical network unit 20 in order to arrive at the reflective splitter 11 at the proper time slot occupied by the specific optical network unit 20. By sequential initialisation of each optical network unit 20, all optical network units 20 can thus be synchronised in the time slot structure, synchronised to the firstly initialised optical network unit 20.

In a preferred embodiment, the optical network units 20 also derive information about the time it takes for traffic transmitted by the optical network unit 20 to reach the reflective splitter 11. This can be measured by measuring the time period between sending and receiving the initialization message. Also the optical distance between the optical network unit 20 and the optical line terminal 3 could be derived from this measured time, as the (optical) distance between reflective splitter 11 and the optical line terminal 3 is known at installation of the reflective splitter 11. This information can be used to determine the proper start time for sending messages in an assigned timeslot.

In another embodiment the optical network units 20 might not be ordered in a hierarchy, but is initialization of the communication done in a random order in which each optical network unit 20 decides on it's own when to start communicating. In yet another embodiment the optical line terminal 3 imposes the order, e.g. by sending control messages comprising information on time slot assignment.

Instead of prior art systems. the optical network units 20 play an active role in the initialisation and synchronization process. In known systems, the optical line terminal 3 controls the time slots used by the individual optical network units 20, but according to the present invention. this task is performed by the optical network units 20.

However, in a preferred embodiment of the present invention. the optical line terminal 3 is still capable of imposing maximum bandwidth available for each optical network unit 20. The optical line terminal 3 can impose this maximum by e.g. sending a control message to each optical network unit 20. The imposed maximum bandwidth available can be different for each optical network unit 20 and can also be zero for some optical network units 20. The optical line terminal 3 thus still has the ability to block specific optical network units 20 from communication.

In the possible embodiment discussed here, Fabry Perot lasers are used (not shown) as low cost optical power source in each optical network unit 20. The upstream traffic is located in the 1550 nm window and the downstream traffic, coming from the optical line terminal 3 is located in the 1300 nm window. Of course, the reflected traffic is also located in the 1550 nm window. Also other known types of lasers and domains for the wavelengths can be used. In order to reduce costs, preferably cheap uncooled lasers should be used.

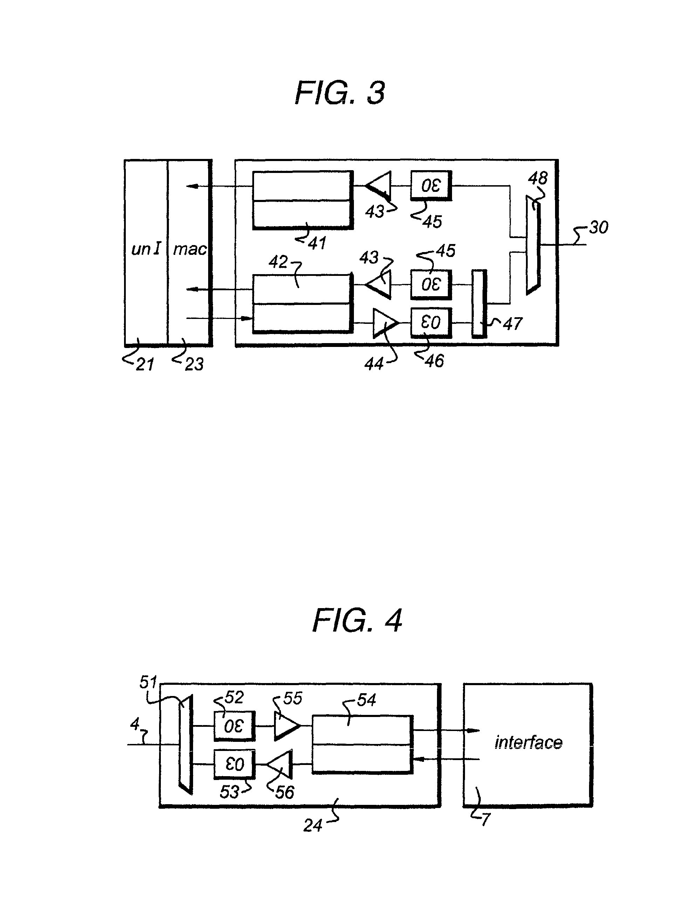

In order for an optical network unit 20 to successfully participate in the above-explained method, the optical network units 20 should be intelligent network devices. Figure 3 shows a possible embodiment of an optical front end 21 which is part of such an optical network unit 20. The optical front end 21 is arranged to communicate with the end-user via a user-to-network interface (UNI) 22 and a message authentication code (MAC) 23. The user-to-network interface 22 controls the communication between the end-user and the optical front end 21 and as such is known to the person skilled in the art. The message authentication code 23 provides the authentication of the message so that secure sending is possible, also known to the person skilled in the art.
The optical front end 21 of the optical network unit 20 shown comprises a first interface 41 for the reception of downstream traffic and a second interface 42 for providing the upstream transmission of the traffic and monitoring the reflected upstream traffic. The optical front end 21 also comprises a bandsplitter 48 to divide the traffic coming from the reflective splitter 11 via communication channel 30 between the first interface 41 and the second interface 42. All the traffic coming from communication channel 30 that is located in the 1300 nm window is directed to the first interface 41. All the traffic coming from communication channel 30 that is located in the 1550 nm window is directed to the second interface 42. After the incoming traffic has passed the bandsplitter 48, it is converted from the optical to the electrical domain. For the first interface 41 this is done by a first OE-converter 45 and for the second interface 42 this is done by a second OE-converter 49.
The connection between the first OE-converter 45 and the first interface 41 and the connection between the second OE-converter 49 and the second interface 42 both comprise a buffer 43. Such a buffer is known to the person skilled in the art and is used to momentarily store an advance supply of data to compensate for momentary delays.

The traffic generated by the optical network unit 20 is located in the 1550 nm window and is sent by the optical front end 21 of the optical network unit 20 to the reflective splitter 11 via communication channel 30. This is done by the second interface 42 and the traffic is converted by an EO-converter 46 from the electrical to the optical domain. The connection between the second interface 42 and the EO-converter 46 comprises a buffer 43.
The connection between the EO-converter 46 and the bandsplitter 48 comprises a 2x1 splitter 47, known to the person skilled in the art.
The optical network unit 21 as described allows for implementation on a personal computer or can be placed in a utility cabinet indoor. For this an interface may be present between the optical network unit 20 and e.g. the subscriber's PC or IP-Phone.

Figure 4 shows a possible embodiment of an optical front-end 24 of the optical line terminal 3 as used in the network architecture according to figure 2, comprising a band splitter 51 connected to the first communication channel 4 from the reflective splitter 11. Communication channel 4 is connected to the band splitter 51. The band splitter 51 divides the traffic in two separate lines according to the wavelength range (1550/1300 nm), of which one is connected with the receiving part of the interface 54 via an OE-converter 52, and the other line is connected with the transmitting part of the interface 54 via an EO-converter 53. The connection between the OE-converter 52 and the receiving part of the interface 54 and the connection between the EO-converter 53 and the transmitting part of the interface 54 both comprise a buffer 55, 56.

The optical front-end 24 is connected with the rest of the optical line terminal 3 via an interface device 7, known to the person skilled in the art.

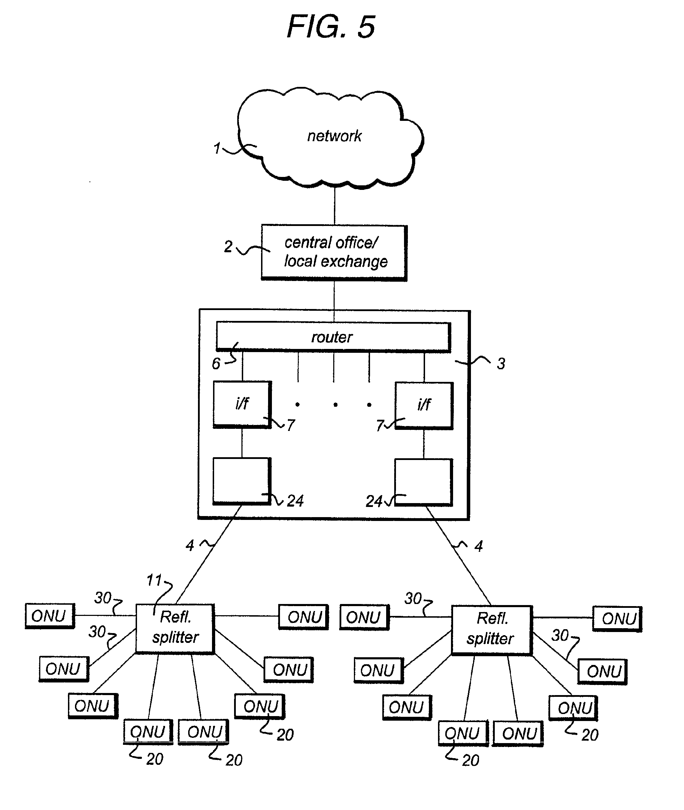

As already mentioned above, the network architecture comprising the reflective splitter 11 is easily scaleable. Figure 5 shows an example of a network architecture in which more than one reflective splitter 11 is connected to said optical line terminal 3. Each reflective splitter 11 is arranged to communicate with an interface device 7 via an optical front-end 24 as described above. The optical line terminal 3 also comprises a router 6, which is arranged to communicate with each interface device 7. The router 6 is known to the person skilled in the art. Using a router 6 makes it possible to easily scale up the network, because a plurality of reflective splitters 11 can be connected with a single router 6.

For the purpose of teaching the invention, preferred embodiments of the method and devices of the invention have been described above. It will be apparent for the person skilled in the art that other alternative and equivalent embodiments of the invention can be conceived and reduced to practice without departing from the true spirit of the invention, the scope of the invention being only limited by the annexed claims.

## Claims

1. Splitter, connectable to at least one optical line terminal (3) and at least two optical network units (20),
in which said splitter (11), when connected to said optical line terminal (3), is arranged to communicate with said optical line terminal (3) via a first communication channel (4), and
in which said splitter (11), when connected to said two or more optical network units (20), is arranged to communicate with said two or more optical network units (20) via a separate second communication channel (30) for each optical network unit (20), and
in which said splitter (11) is arranged to pass through all communication signals received from the optical line terminal (3) to all said optical network units (20), and
in which said splitter (11) is arranged to pass through all communication signals received from any one of the optical network units (20) to said optical line terminal (3),
**characterized in that**
said splitter (11) is arranged to pass through all communication signals received from any one of the optical network units (20) to all optical network units (20).

2. Splitter according to claim 1,
**characterized in that**
said splitter (11) is arranged for reflecting all communication signals received from any one of the optical network units (20) to all optical network units (20).

3. Splitter according to claim 2,
**characterized in that**
said splitter comprises a highly reflective mirror (13), such as a gold plated polished connector or in fiber reflective fiber Bragg grating.

4. Optical distribution network, comprising at least one splitter (11) according to one of the preceding claims, in which the splitter (11) is connectable to an optical line terminal (3) and a plurality of optical network units (20)
**characterized in that**
said optical line terminal (3) is arranged to communicate with a network (1), in which said network (1) is for instance the internet or a intranet.

5. Optical distribution network according to claim 4.
**characterized in that**
said optical line terminal (3) comprises a router (6), in operation the router (6) being connected to the first communication channel (4).

6. Optical distribution network according to claim 4 or 5,
**characterized in that**
the router (6) is connected to a plurality of splitters (11) via associated first communication channels (4).

7. Method for communication in a passive optical network, the passive optical network connecting an optical line terminal (3) with a plurality of optical network units (20) based on time division multiple access and comprising at least one splitter (11) according to one of the claims 1 to 4,
**characterized in that**
the method comprises the steps of:
• initializing communication by one of the plurality of optical network units (20) by sending an initialization message using a predetermined part of the bandwidth available from the optical line terminal (3);
• monitoring the received signal for messages from other ones of the plurality of optical network units (20) for detecting collision of data traffic; and, if collision occurs, delaying transmission of further packets by a predetermined amount of time such that no overlap of transmissions occur.

8. Method according to claim 7,
**characterized in that**
the method further comprises the steps of:
• measuring the time between sending a message by an optical network unit (20) and receiving that same message by that same optical network unit (20);
• using the measured time to determine the proper start time for transmitting in an assigned time slot.

9. Method according to claim 7 or 8,
**characterized in that**
initialization of the optical network units (20) is executed in a predetermined order.

10. Method according to one of the claims 7 to 9
**characterized in that**
each optical network unit (20) receives a control message comprising a maximum available bandwidth amount for each of the plurality of optical network units (20).
